# EUROPEAN PATENT APPLICATION

(11) **EP 4 674 574 A1**
(43) Date of publication of application: **07.01.2026**
(21) Application number: 23925336.2
(22) Date of filing: 01.06.2023
(51) Int. Cl.: B25J 5/00, B23P 19/06, B25B 23/04

(54) **ROBOT SYSTEM**

(30) Priority: 28.02.2023 US 202363448728 P
(71) Applicant: KAWASAKI JUKOGYO KABUSHIKI KAISHA, Kobe-shi, Hyogo 650-8670 (JP)
(72) Inventor: YANO, Fuminori, Chuo-ku, Kobe-shi, Hyogo 650-8670 (JP)
(74) Representative: Leinweber & Zimmermann
(86) International application number: PCT/JP2023/020519
(87) International publication number: WO 2024/180782

(57) **Abstract**

A robot system 100 includes: a transport vehicle 1; a movable plate 2 located on the transport vehicle 1 and movable in a predetermined direction; a robot 3 that is located on the movable plate 2, includes an arm 32, and fastens a fastener, and a first fastener supplier 4 that is located on the movable plate 2 and supplies the fastener to a distal end of the arm 32.

## Description

### FIELD

The technique disclosed here relates to a robot system.

### BACKGROUND

As disclosed in Patent Document 1, for example, a known assembly robot system includes a transport vehicle that has wheels for self-traveling and a robot arm located on the transport vehicle to perform assembly work.

### CITATION LIST

### PATENT DOCUMENT

Patent Document 1: Japanese Patent No. 6778993

### SUMMARY

### Technical Problems

A robot system as described in Patent Document 1 needs to include components for required functions, and tends to be large in size. This increases installation space for the robot system, and thus, size reduction of the robot system is demanded. However, a small-size robot system has a problem of relatively small size of an area that a distal end of a robot arm can reach when the robot arm is extended toward a workpiece.

It is therefore an object of the present disclosure to provide a robot system that can be miniaturized without narrowing a reachable area of a distal end of a robot arm.

### Solution to Problem

A robot system disclosed here includes a transport vehicle, a movable plate, a robot, and a first fastener supplier. The movable plate is located on the transport vehicle and movable in a predetermined direction. The robot is located on the movable plate, includes an arm, and fastens a fastener. The first fastener supplier is located on the movable plate and supplies the fastener to a distal end of the arm.

### Effects of the Invention

The robot system disclosed here can be miniaturized without narrowing a reachable area of the robot.

### BRIEF DESCRIPTION OF THE DRAWINGS

[FIG. 1] FIG. 1 is a side view of a robot system.
[FIG. 2] FIG. 2 is a plan view of the robot system.
[FIG. 3] FIG. 3 is a side view of the robot system in a state where a movable plate has moved forward.
[FIG. 4] FIG. 4 is an enlarged side view illustrating a main portion of a robot.
[FIG. 5] FIG. 5 is a side view of a first overturn preventer.
[FIG. 6] FIG. 6 is a side view of a second overturn preventer.
[FIG. 7] FIG. 7 is a plan view illustrating a movable range of a robot arm in a horizontal plane of the robot.

### DESCRIPTION OF EMBODIMENTS

An exemplary embodiment will be described in detail hereinafter with reference to the drawings.

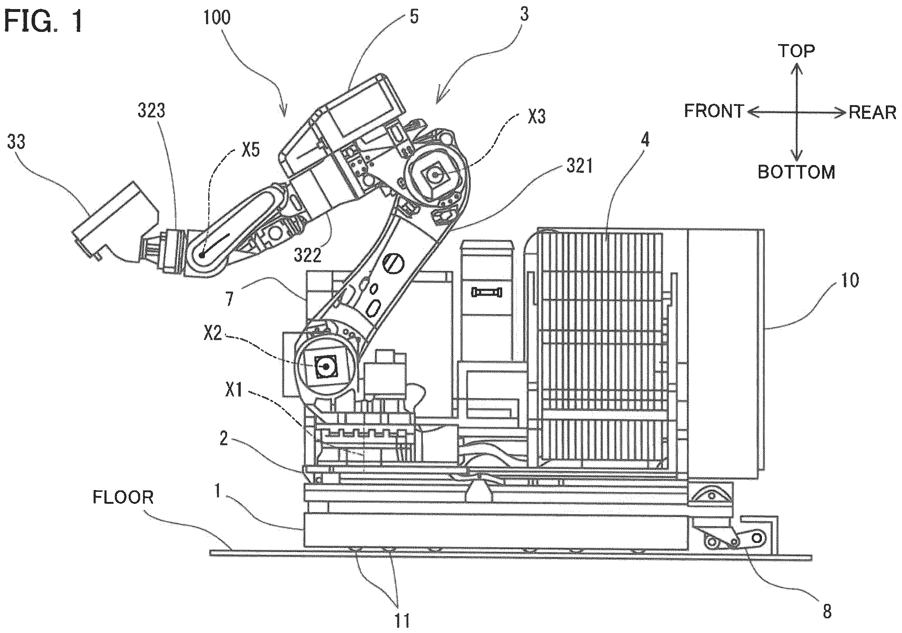

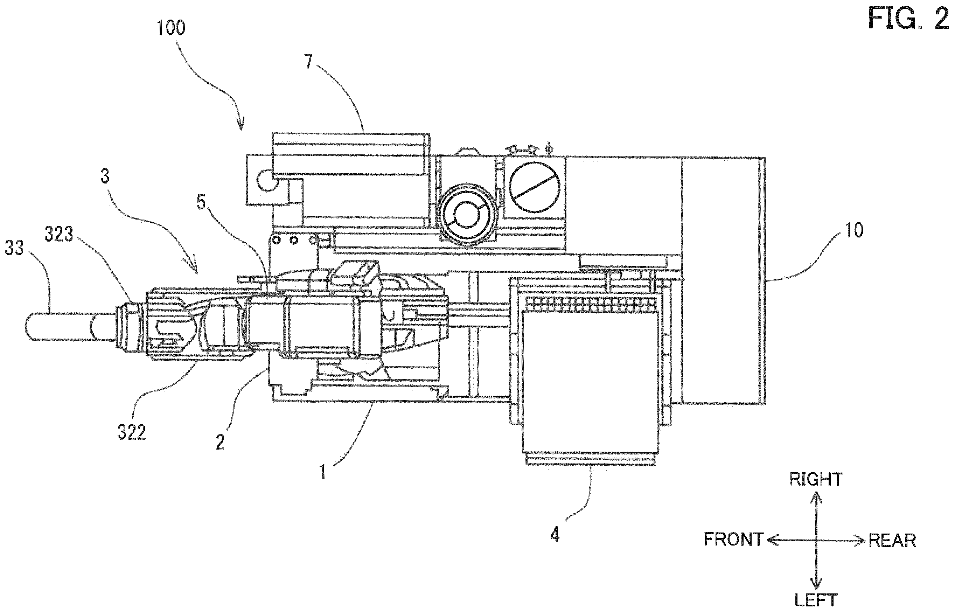

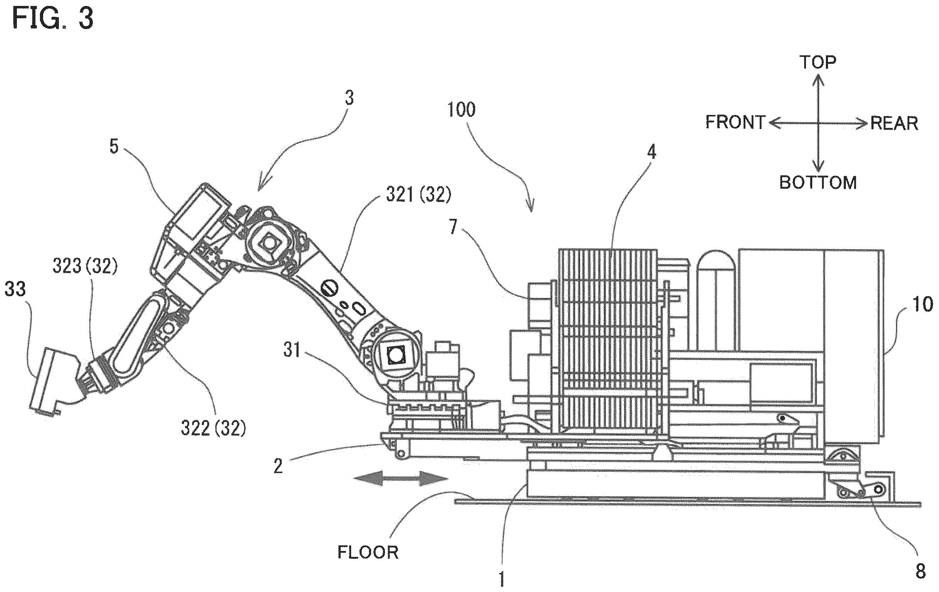

FIG. 1 is a side view of a robot system 100. FIG. 2 is a plan view of the robot system 100. FIG. 3 is a side view of the robot system 100 in a state where the movable plate 2 has moved forward. The robot system 100 performs a fastening job of a fastener for assembling an aircraft. The robot system 100 includes a transport vehicle 1, the movable plate 2, a robot 3, and a first fastener supplier 4.

In the following description, the front-rear direction is a direction in which a direction to which the movable plate 2 moves to a position at which the robot 3 is located outside the transport vehicle 1 in a plan view is defined as forward, and the opposite direction is defined as rearward. The left-right direction is a direction in which the right side when facing forward from the rear side of the robot is defined as the right, and the left side in this state is defined as the left. The front-rear direction, the left-right direction, and a direction expressed by a combination of thereof will be collectively referred to as a horizontal direction.

The transport vehicle 1 is a vehicle capable of traveling by itself. The transport vehicle 1 is, for example, an automated guided vehicle (AGV). The transport vehicle 1 has a substantially flat rectangular shape. The transport vehicle 1 includes drive wheels 11 driven by a driver. In this example, the transport vehicle 1 travels in the horizontal direction.

The movable plate 2 is located on the transport vehicle 1 and movable in a predetermined direction. The robot 3 is located on the movable plate 2, and includes an arm 32 to fasten a fastener. The first fastener supplier 4 is located on the movable plate 2 and supplies a fastener to the distal end of the arm 32.

Specifically, the movable plate 2 is mounted on the transport vehicle 1. The movable plate 2 has a substantially plate shape expanding in the horizontal direction, and includes an upper surface 21. The robot 3 and the first fastener supplier 4 are attached to the upper surface 21 of the movable plate 2. In this example, the movable plate 2 is located in a substantially left half portion of the transport vehicle 1, and the longitudinal direction of the movable plate 2 coincides with the front-rear direction of the robot system 100. As illustrated in FIG. 3, the movable plate 2 is movable in the horizontal direction. More specifically, the movable plate 2 moves in the horizontal direction so that the robot 3 is located outside the transport vehicle 1 in a plan view. In this example, the movable plate 2 moves in the front-rear direction.

Specifically, the robot 3 includes a base 31, the arm 32 coupled to the base 31, and an end effector 33 coupled to the arm 32.

The base 31 is fixed to the upper surface 21 of the movable plate 2. More specifically, the base 31 is located on a front part of the movable plate 2. That is, in this example, the robot 3 is located on the front part of the movable plate 2. The base 31 is connected to the movable plate 2 to be rotatable about an axis X1 extending in the top-bottom direction. The arm 32 is a so-called vertical articulated arm. The arm 32 includes a first link 321, a second link 322, and a wrist 323. The first link 321 is connected to the base 31 to be rotatable about an axis X2 extending in the horizontal direction. The second link 322 is connected to the first link 321 to be rotatable about an axis X3 extending in the horizontal direction. The wrist 323 is connected to the second link 322 to be rotatable about an axis X5 extending in the horizontal direction. The end effector 33 is attached to the distal end of the arm 32, that is, the wrist 323. The end effector 33 includes a work tool that fastens a fastener.

The first fastener supplier 4 is located on the upper surface 21 of the movable plate 2. More specifically, the first fastener supplier 4 is located on a rear part of the movable plate 2. That is, the first fastener supplier 4 is located rearward of the robot 3 on the movable plate 2. The first fastener supplier 4 supplies a fastener to the end effector 33. In this example, the first fastener supplier 4 supplies a permanent fastener as a fastener. The permanent fastener is a fastener that performs permanent fastening on a workpiece.

The robot system 100 includes a second fastener supplier 5. The second fastener supplier 5 is attached to the arm 32. The second fastener supplier 5 supplies a fastener longer than the fastener supplied by the first fastener supplier 4, to the distal end of the arm 32.

More specifically, the second fastener supplier 5 is attached to the second link 322 of the arm 32. The second fastener supplier 5 supplies the fastener to the end effector 33. In this example, the second fastener supplier 5 supplies a temporary fastener as a fastener. The temporary fastener is a fastener that performs fastening in order to temporarily fix a workpiece. In general, temporary fasteners are longer and heavier than permanent fasteners.

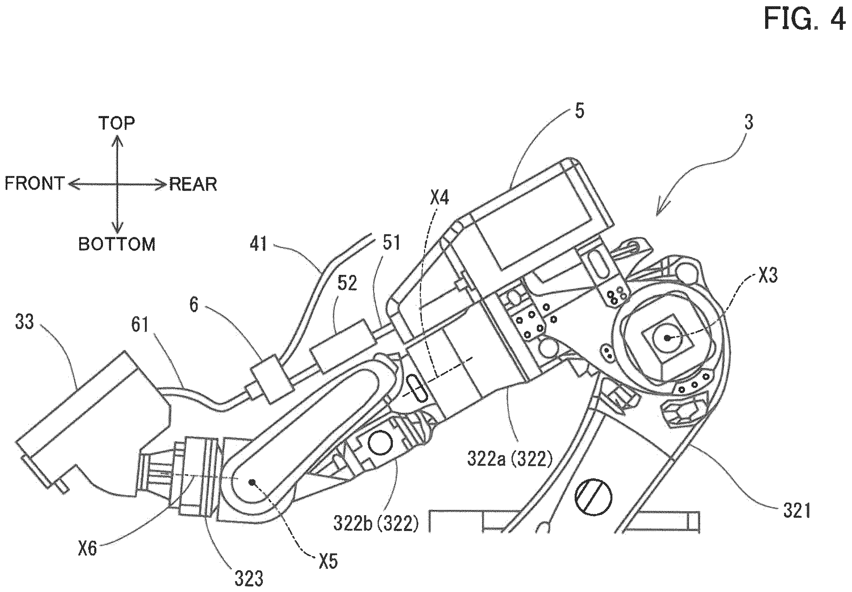

FIG. 4 is an enlarged side view illustrating a main portion of the robot 3. The first fastener supplier 4 includes a first conveyance path 41. The second fastener supplier 5 includes a second conveyance path 51. The first conveyance path 41 and the second conveyance path 51 are conveyance paths in each of which a fastener is conveyed toward the distal end of the distal end of the arm 32, that is, toward the end effector 33.

The robot system 100 further includes a selector 6. The selector 6 is attached to the arm 32 and connected to the first conveyance path 41 and the second conveyance path 51. The selector 6 selects one of the fastener of the first conveyance path 41 and the fastener of the second conveyance path 51, and supplies the selected fastener to the distal end of the arm 32, that is, the end effector 33.

Specifically, the selector 6 is attached to a position between the distal end of the arm 32 and the second fastener supplier 5. In other words, the selector 6 is attached to a position between the end effector 33 and the second fastener supplier 5. The first conveyance path 41 has one end connected to the first fastener supplier 4 and the other end connected to the selector 6. The second conveyance path 51 has one end connected to the second fastener supplier 5 and the other end connected to the selector 6. The selector 6 includes a third conveyance path 61. The third conveyance path 61 has one end connected to the selector 6 and the other end connected to the end effector 33. The second conveyance path 51 in this example is equipped with an ejector 52. The ejector 52 supplements a driving force for conveying the temporary fastener in the second conveyance path 51. The first conveyance path 41, the second conveyance path 51, and the third conveyance path 61 are, for example, hoses.

In this example, the second link 322 includes a first portion 322a and a second portion 322b. The first portion 322a and the second portion 322b are coupled to each other. The first portion 322a is rotatably coupled to the first link 321. The second portion 322b is rotatably coupled to the wrist 323. The second portion 322b is coupled to the first portion 322a to be rotatable about an axis X4. The axis X4 is an axis extending in the same direction as the direction in which the second link 322 extends. The second fastener supplier 5 is attached to the first portion 322a of the second link 322. A portion of the wrist 323 to which the end effector 33 is attached is rotatable about an axis X6. The axis X6 is an axis extending in the same direction as the direction in which the wrist 323 extends.

The robot system 100 further includes a tool changer 7 that replaces the work tool of the end effector 33. The tool changer 7 is attached to the transport vehicle 1. Specifically, the tool changer 7 is located at a sideways position to the movable plate 2 with respect to the moving direction of the movable plate 2 in the transport vehicle 1. More specifically, the tool changer 7 is located at a sideways position to the movable plate 2 with respect to the front-rear direction. In this example, the tool changer 7 is located at the right of the movable plate 2. That is, the tool changer 7 is directly mounted not on the movable plate 2 but on the transport vehicle 1. In this example, the tool changer 7 is located on the front part of the transport vehicle 1.

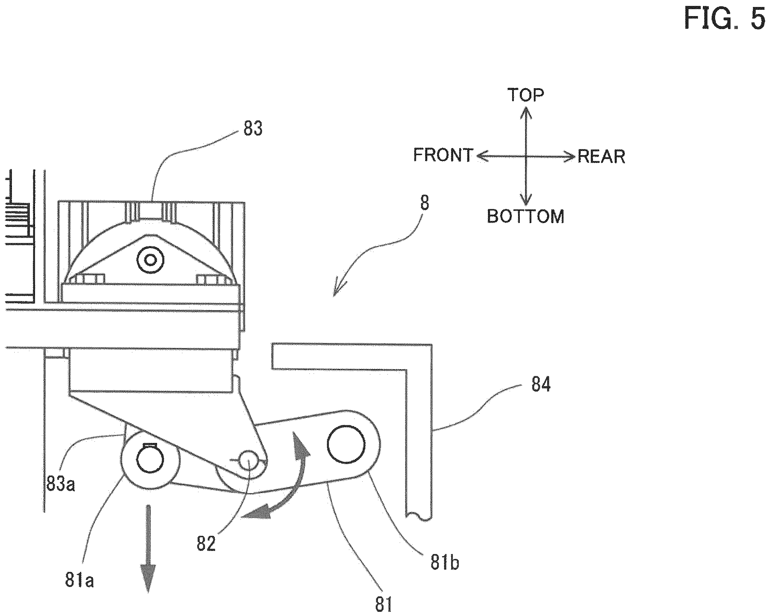

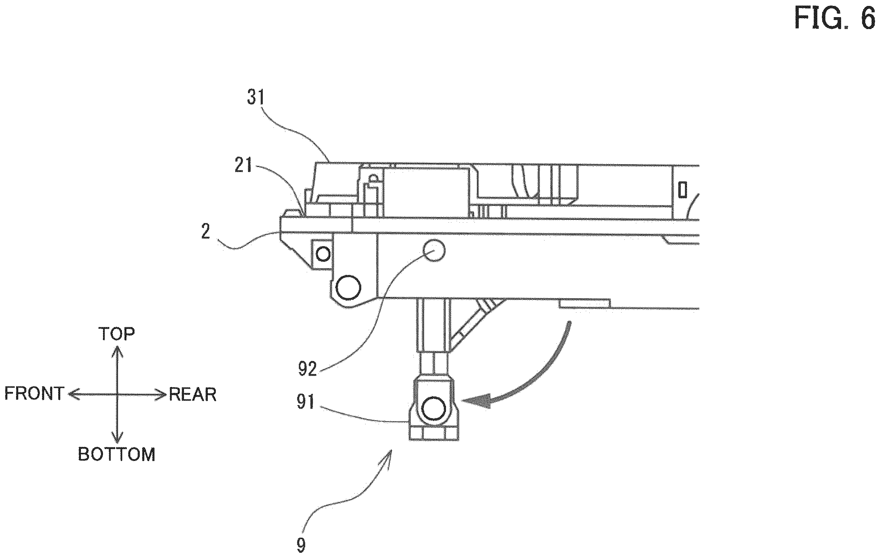

FIG. 5 is a side view of a first overturn preventer 8. FIG. 6 is a side view of a second overturn preventer 9. The robot system 100 further includes the first overturn preventer 8 and the second overturn preventer 9 that prevent overturn of the transport vehicle 1. The first overturn preventer 8 and the second overturn preventer 9 prevent the transport vehicle 1 from overturning forward.

As illustrated in FIG. 5, the first overturn preventer 8 includes a lock 81 that engages with a locked target 84 fixed to a floor. The floor is an example of the ground. Specifically, the first overturn preventer 8 is located rearward of the transport vehicle 1. The first overturn preventer 8 includes the lock 81 and an actuator 83.

The lock 81 includes a first end portion 81a and a second end portion 81b. The lock 81 is supported by a shaft 82 extending in the horizontal direction. More specifically, a portion of the lock 81 between the first end portion 81a and the second end portion 81b is supported by the shaft 82. The lock 81 is attached to the shaft 82 to be rotatable about the axis of the shaft 82. The actuator 83 rotationally drives the lock 81. In this example, the actuator 83 is a cylinder. The actuator 83 includes a rod 83a that advances and retreats in the top-bottom direction. The rod 83a is coupled to the first end portion 81a of the lock 81. In this example, the locked target 84 is an angle material. The angle material is a long member with an L-shaped cross section.

In the first overturn preventer 8, advancing or retracting movement of the rod 83a causes the lock 81 to rotate to switch between a locked state and an unlocked state. Specifically, when the rod 83a advances downward, the lock 81 rotates to switch to the locked state in which the lock 83a engages with the locked target 84. That is, in the locked state, the second end portion 81b of the lock 81 is in contact with the locked target 84. When the rod 83a retracts upward, the lock 81 rotates to switch to the unlocked state. That is, in the unlocked state, the second end portion 81b of the lock 81 is separated from the locked target 84. In this example, while the transport vehicle 1 is stopped, that is, the robot system 100 is performing a fastening job, the first overturn preventer 8 is in the locked state. Accordingly, overturn of the transport vehicle 1 during the fastening job is prevented by the first overturn preventer 8. While the transport vehicle 1 is traveling, that is, while the robot system 100 does not perform the fastening job, the first overturn preventer 8 is in the unlocked state. Accordingly, a traveling resistance of the transport vehicle 1 can be reduced.

As illustrated in FIG. 6, the second overturn preventer 9 includes a stand 91. The stand 91 is located on a lower side of a front end portion of the movable plate 2. The stand 91 is rotatably supported by a shaft 92 extending in the horizontal direction. In the second overturn preventer 9, the stand 91 is rotated by an actuator to thereby switch between a supporting state and a stowed state. In the supporting state, the stand 91 extends in the top-bottom direction and contacts the floor. In the stowed state, the stand 91 is stowed in the movable plate 2. In this example, when the transport vehicle 1 is stopped, that is, the movable plate 2 has moved forward, the second overturn preventer 9 switches to the supporting state. Accordingly, the movable plate 2 is supported by the stand 91, thereby preventing the transport vehicle 1 from overturning. When the transport vehicle 1 travels, the second overturn preventer 9 switches to the stowed state.

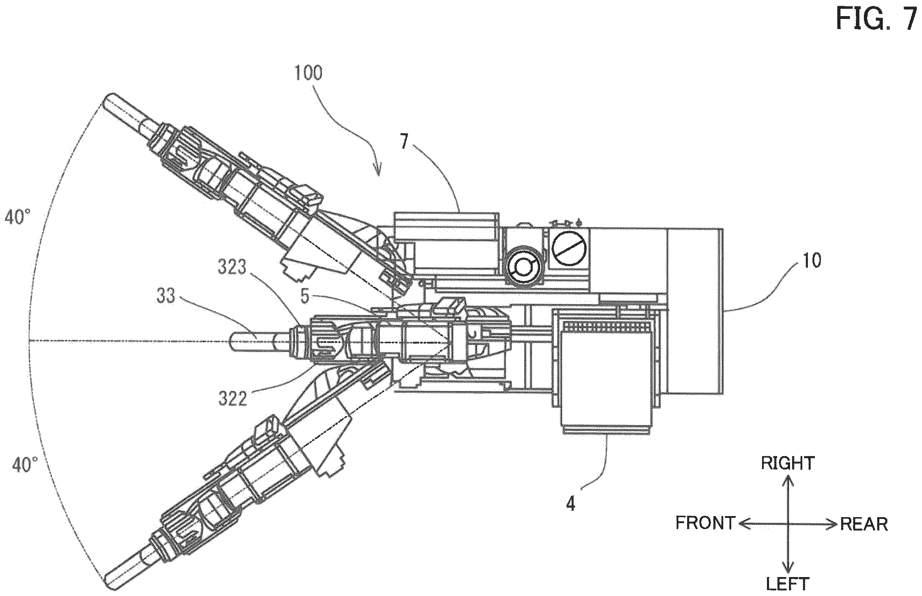

FIG. 7 is a plan view illustrating a movable range of the arm 32 of the robot 3 in a horizontal plane. In a plan view of the robot system 100, when it is assumed that a state where the direction in which the arm 32 extends coincides with the front-rear direction of the robot 3 is 0 degrees, the arm 32, more specifically the first link 321, can rotate 40 degrees to the left and right around the axis X2. Even when the arm 32 rotates 40 degrees to the left or right, the arm 32 does not interfere with other equipment including the tool changer 7.

The robot system 100 further includes a control board 10. The control board 10 controls the entire robot system 100 such as the robot 3, the first fastener supplier 4, the second fastener supplier 5, and the selector 6. As illustrated in FIG. 2, the control board 10 is not located on the movable plate 2 and is directly located on the rear part of the transport vehicle 1. Since the control board 10 is located on the rear part of the transport vehicle 1, this structure contributes to prevention of overturn of the transport vehicle 1 that can occur when the movable plate 2 moves so that the robot 3 is located outside the transport vehicle 1.

A fastening job of the thus-configured robot system 100 will be described. A permanent fastener is conveyed from the first fastener supplier 4 through the first conveyance path 41 toward the end effector 33. On the other hand, a temporary fastener is conveyed from the second fastener supplier 5 through the second conveyance path 51 toward the end effector 33. At this time, since the second conveyance path 51 is provided with the ejector 52, even a long heavy temporary fastener can be conveyed. In this example, the permanent fastener and the temporary fastener are conveyed by compressed air. The selector 6 selects one of the conveyed permanent fastener and the conveyed temporary fastener, and supplies the selected fastener to the end effector 33 through the third conveyance path 61.

In addition, when necessary, the work tool of the end effector 33 is replaced with another tool by the tool changer 7. Specifically, the arm 32 is controlled such that the end effector 33 moves to the tool changer 7. At this time, since the tool changer 7 is located on a front part of the transport vehicle 1, compared to a case where the tool changer 7 is located on a rear part of the transport vehicle 1, for example, the end effector 33 of the arm 32 moves in a short distance. Further, the movable plate 2 moves forward when necessary. Accordingly, the robot 3 moves to the outside of the transport vehicle 1 in a plan view, and thus, a reachable area of the robot 3 increases. Here, since the first fastener supplier 4 is mounted on the movable plate 2 and the second fastener supplier 5 is attached to the arm 32, the relative distance of the first fastener supplier 4 and the second fastener supplier 5 to the robot 3 is unchanged even when the movable plate 2 moves forward. Accordingly, the lengths of the first conveyance path 41 and the second conveyance path 51 can be reduced. As a result, the size of the robot system 100 can be reduced.

As described above, the robot system 100 includes the transport vehicle 1, the movable plate 2 that is located on the transport vehicle 1 and movable in a predetermined direction, the robot 3 that is located on the movable plate 2, includes the arm 32, and fastens a fastener, and the first fastener supplier 4 located on the movable plate 2 and supplies the fastener to the distal end of the arm 32.

In this configuration, since the robot 3 is located on the movable plate 2, the reachable area of the robot 3 increases by movement of the movable plate 2. On the other hand, with the first fastener supplier 4, it is possible to supply a fastener necessary for the robot 3. Since the first fastener supplier 4 is located on the movable plate 2 together with the robot 3, the relative distance of the first fastener supplier 4 to the robot 3 does not change even when the movable plate 2 moves. This shortens the conveyance path of the fastener from the first fastener supplier 4 to the distal end of the arm 32. Accordingly, the size of the robot system 100 can be reduced without narrowing the reachable area of the robot 3.

The movable plate 2 includes the upper surface 21 to which the robot 3 and the first fastener supplier 4 are attached, and moves in the horizontal direction so that the robot 3 is located outside the transport vehicle 1 in a plan view.

In this configuration, since the movable plate 2 moves in the horizontal direction so that the robot 3 is located outside the transport vehicle 1 in a plan view, the reachable area of the robot 3 further increases. Thus, narrowing of the reachable area of the robot 3 can be further suppressed.

In addition, the robot system 100 further includes the second fastener supplier 5 that is attached to the arm 32 and supplies a fastener longer than the fastener supplied by the first fastener supplier 4, to the distal end of the arm 32.

In this configuration, since the second fastener supplier 5 is used, the fastener longer than the fastener of the first fastener supplier 4 can be supplied to the distal end of the arm 32. Since the second fastener supplier 5 is directly attached to the arm 32, the distance between the second fastener supplier 5 and the distal end of the arm 32 is reduced. This shortens the conveyance path from the second fastener supplier 5 to the distal end of the arm, and thus, the size can be reduced. Further, since the conveyance path is shortened, the long fastener can be easily conveyed to the distal end of the arm 32.

The robot 3 further includes the base 31 fixed to the movable plate 2. The arm 32 includes the first link 321 coupled to the base 31 to be rotatable about the axis X2 extending in the horizontal direction, and the second link 322 coupled to the first link 321 to be rotatable about the axis X3 extending in the horizontal direction. The second fastener supplier 5 is attached to the second link 322.

In this configuration, the second fastener supplier 5 is attached not to the first link 321 but to the second link 322. In general, an operating area of the second link 322 is larger than an operating area of the first link 321. This effectively shortens the conveyance path from the second fastener supplier 5 to the distal end of the arm 32. Accordingly, the size can be further reduced.

The first fastener supplier 4 includes the first conveyance path 41 in which the fastener is conveyed toward the distal end of the arm 32, and the second fastener supplier 5 includes the second conveyance path 51 in which the fastener is conveyed toward the distal end of the arm 32. The robot system 100 further includes the selector 6 that is attached to the arm 32, is connected to the first conveyance path 41 and the second conveyance path 51, selects one of the fastener of the first conveyance path 41 and the fastener of the second conveyance path 51, and supplies the selected fastener to the distal end of the arm 32.

In this configuration, since the selector 6 is used, a necessary fastener is selected among fasteners with different lengths and supplied to the distal end of the arm 32. Thus, compared to a case where the first conveyance path 41 and the second conveyance path 51 are directly connected to the distal end of the arm 32, for example, the first conveyance path 41 and the second conveyance path 51 can be shortened.

The selector 6 is attached to a position between the distal end of the arm 32 and the second fastener supplier 5.

In this configuration, the first conveyance path 41 and the second conveyance path 51 can be effectively shortened.

The robot 3 further includes the end effector 33 attached to the distal end of the arm 32 and including a work tool that fastens a fastener. The robot system 100 further includes the tool changer 7 that is attached to the transport vehicle 1 and replaces the work tool of the end effector 33.

In this configuration, since the tool changer 7 is located on the transport vehicle 1, it is possible to shorten the operating distance of the robot 3 related to the replacement of work tools, compared to a case where the tool changer 7 is located outside the transport vehicle 1, for example. In addition, since the tool changer 7 is mounted on the transport vehicle 1, this configuration contributes to prevention of overturn of the transport vehicle 1 that can occur when the movable plate 2 moves so that the robot 3 is located outside the transport vehicle 1.

The robot system 100 further includes the first overturn preventer 8 and the second overturn preventer 9 that prevent overturn of the transport vehicle 1.

In this configuration, although the transport vehicle 1 becomes more prone to overturning when the robot 3 is located outside the transport vehicle 1 by the movable plate 2, it is possible to reliably prevent the overturn of the transport vehicle 1.

The first overturn preventer 8 includes the lock 81 that engages with to the locked target 84 fixed to the floor (ground).

In this configuration, overturn of the transport vehicle 1 can be prevented with a simple structure.

The tool changer 7 is located at a sideways position to the mobile plate 2 with respect to the moving direction of the movable plate 2 in the transport vehicle 1, and when it is assumed that a direction to which the movable plate 2 moves so that the robot 3 is located outside the transport vehicle 1 in a plan view is forward, the tool changer 7 is located in a front part of the transport vehicle 1.

In this configuration, since the tool changer 7 is located on the same front side as the side to which the movable plate 2 moves in the transport vehicle 1, the operating distance of the robot 3 related to replacement of work tools can be further shortened.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the second fastener supplier 5 may be omitted. In this case, the selector 6 is unnecessary.

The tool changer 7 may be omitted.

The number of links of the arm 32 is not limited to the number described above. For example, the arm 32 may include three links. In this case, the second fastener supplier 5 can be attached to the third link from the base side.

The movable plate 2 may move in the top-bottom direction.

The robot system 100 may include only one of the first overturn preventer 8 and the second overturn preventer 9.

## Claims

1. A robot system comprising:
a transport vehicle;
a movable plate located on the transport vehicle and movable in a predetermined direction;
a robot that is located on the movable plate, includes an arm, and fastens a fastener; and
a first fastener supplier that is located on the movable plate and supplies the fastener to a distal end of the arm.

2. The robot system according to claim 1, wherein
the movable plate includes an upper surface to which the robot and the first fastener supplier are attached, and moves in a horizontal direction so that the robot is located outside the transport vehicle in a plan view.

3. The robot system according to claim 1, further comprising
a second fastener supplier that is attached to the arm and supplies a fastener longer than the fastener supplied by the first fastener supplier, to the distal end of the arm.

4. The robot system according to claim 3, wherein
the robot further includes a base that is fixed to the movable plate,
the arm includes
a first link coupled to the base to be rotatable about an axis extending in a horizontal direction, and
a second link coupled to the first link to be rotatable about an axis extending in the horizontal direction, and
the second fastener supplier is attached to the second link.

5. The robot system according to claim 3 or 4, wherein
the first fastener supplier includes a first conveyance path in which the fastener is conveyed toward the distal end of the arm,
the second fastener supplier includes a second conveyance path in which the fastener is conveyed toward the distal end of the arm, and
the robot system further comprises a selector that is attached to the arm, is connected to the first conveyance path and the second conveyance path, selects one of the fastener of the first conveyance path and the fastener of the second conveyance path, and supplies the selected fastener to the distal end of the arm.

6. The robot system according to claim 5, wherein
the selector is attached to a position between the distal end of the arm and the second fastener supplier.

7. The robot system according to any one of claims 1 to 4, wherein
the robot further includes an end effector attached to the distal end of the arm and including a work tool that fastens a fastener, and
the robot system further includes a tool changer that is attached to the transport vehicle and replaces the work tool of the end effector.

8. The robot system according to claim 2 or 3, further comprising
an overturn preventer that prevents overturn of the transport vehicle.

9. The robot system according to claim 8, wherein
the overturn preventer includes a lock that engages with a locked target fixed to ground.

10. The robot system according to claim 2, wherein
the tool changer is located at a sideways position to the movable plate with respect to a moving direction of the movable plate, and when it is assumed that a direction to which the movable plate moves so that the robot is located outside the transport vehicle in a plan view is forward, the tool changer is located on a front part of the transport vehicle.
